# EUROPÄISCHE PATENTSCHRIFT

(11) **EP 1 404 991 B1**
(45) Veröffentlichungstag und Bekanntmachung des Hinweises auf die Patenterteilung: **05.10.2005**
(21) Anmeldenummer: 02751121.1
(22) Anmeldetag: 08.07.2002
(51) Int. Cl.: F16H 57/08

(54) **STEGEINHEIT**
WEB UNIT
UNITE ENTRETOISE

(30) Priorität: 11.07.2001 DE 10133703
(43) Veröffentlichungstag der Anmeldung: 07.04.2004
(73) Patentinhaber: Voith Turbo GmbH & Co. KG, 89522 Heidenheim (DE)
(72) Erfinder: KÖRNER, Tillmann, 89551 Zang (DE); MEIER-BURKAMP, Gerhard, 89522 Heidenheim (DE); LANGENBECK, Konrad, 70839 Gerlingen (DE); SCHWÄMMLE, Timm, 71726 Benningen (DE); GLÖGGLER, Christian, 89134 Blaustein (DE)
(74) Vertreter: Dr. Weitzel & Partner
(86) Internationale Anmeldenummer: PCT/EP2002/007579
(87) Internationale Veröffentlichungsnummer: WO 2003/008843

(56) Entgegenhaltungen:
- DE-A- 19 945 242
- FR-A- 2 639 701
- US-A- 5 692 989
- US-A- 6 106 429

## Beschreibung

Die Erfindung betrifft eine Stegeinheit für einen Planetenradsatz, im einzelnen mit den Merkmalen aus dem Oberbegriff des Anspruches 1.

Planetenradsätze gelangen hauptsächlich in Einsatzfällen zur Anwendung, bei denen hohe Drehzahlen und Leistungen koaxial bei hoher Leistungsdichte übertragen werden sollen. Infolge der zunehmend erhöhten Anforderungen an die Übertragungsfähigkeit gewinnt die Steifigkeit eines Planetenradsatzes im Hinblick auf Zahnkorrekturen immer mehr an Bedeutung. Maßgeblichen Einfluß auf die Gesamtsteifigkeit des Planetenradsatzes hat dabei die Gestaltung des Steges. Insbesondere bei Ausführungen mit einem geteilten Steg, umfassend ein mit der Antriebsseite drehfest koppelbares Stegelement und ein mit der Abtriebsseite drehfest koppelbares Stegelement, die miteinander drehfest über sich in axialer Richtung erstreckende und in Umfangsrichtung angeordnete, als Stufenbolzen ausgeführte Übertragungselemente gekoppelt und in axialer Richtung verspannt sind, führen die unter Belastung auftretenden Verformungen der einzelnen miteinander gekoppelten Elemente zu einer sehr unbefriedigenden Breitentragfähigkeit der im Steg gelagerten Planetenräder mit den diesen zugeordneten Verzahnungen an Sonnen- und/oder Hohlrädem, woraus Beschädigungen an den Verzahnungen resultieren können. Auch durch Erhöhung der axialen Verpressung kann dieses Problem nicht gelöst werden.

Eine gattungsgemäße Stegeinheit ist aus der Druckschrift DE-A-19945242 vorbekannt. Diese umfaßt ein erstes Stegelement und ein zweites Stegelement, welche miteinander über sich in axialer Richtung erstreckende und eine theoretische Verbindungsachse beschreibenden Übertragungselemente drehfest gekoppelt und in axialer Richtung verspannbar sind. Diese Stegelemente sind als Feinschneidteile hergestellt. Je zwei auf der Stegwelle angeordnete Führungsscheiben werden über Nietbolzen in einer Presse in einem Arbeitsgang dadurch miteinander verbunden, daß in die Schultern der mit Zapfen versehenen Nietbolzen Ringzacken eingearbeitet werden und daß das die Führungsscheiben in Richtung der Schulter beaufschlagende Werkzeug jeder Presse mit einer daran angepaßten Ringzacke versehen ist. Damit ist in jedem Funktionszustand nach der Montage ein flächiges Anliegen der einzelnen Teile aneinander gegeben. Diese Ausführung der Stegeinheit ist durch eine sehr hohe Steifigkeit des Planetenradsatzes charakterisiert. Die aufgrund der Fügeverfahren erzeugte Spannung der einzelnen miteinander zu kopplenden Elemente führt jedoch auch hier unter Belastung zu auftretenden Verformungen der einzelnen miteinander gekoppelten Elemente, die zu einer reduzierten Breitentragfähigkeit der an dem Steg gelagerten Planetenräder mit den diesen zugeordneten Verzahnungen an Sonnen- und/oder Hohlrädern führen, woraus Beschädigungen an den Verzahnungen resultieren können.

Der Erfindung liegt daher die Aufgabe zugrunde, eine Stegeinheit der eingangs genannten Art derart weiterzuentwickeln, daß mit dieser eine steife Planetenradsatzkonstruktion und ein optimales Tragverhalten der einzelnen Verzahnungselemente gewährleistet wird.

Die erfindungsgemäße Lösung ist durch die Merkmale des Anspruches 1 charakterisiert. Vorteilhafte Ausgestaltungen sind in den Unteransprüchen wiedergegeben.

Die Stegeinheit für Planetenradsätze zur Lagerung von Planetenrädern umfasst ein erstes Stegelement und ein zweites Stegelement, welche miteinander über sich in axialer Richtung erstreckende und eine theoretische Verbindungsachse beschreibende Übertragung- beziehungsweise Verbindungselemente drehfest gekoppelt und in axialer Richtung verspannbar sind. Jedes Übertragungsbeziehungsweise Verbindungselement weist Bereiche unterschiedlicher radialer Abmessungen auf, wobei die daraus gebildeten und zu den einzelnen Stegelementen gerichteten Stirnflächen dieser Bereiche jeweils Kontaktflächen - eine erste und eine zweite Kontaktfläche - bilden, welche an entweder direkt oder über ein Zwischenelement von den zueinander weisenden Stirnseiten der Stegelemente gebildeten Kontaktflächen in sogenannten Kontaktbereichen anliegen. Erfindungsgemäß weist wenigstens ein eine Kontaktfläche eines Kontaktbereiches bildendes Element eine Profilierung auf. Die Profilierung ist im radial äußeren Bereich durch mindestens einen Bereich größerer axialer Erstreckung als in Richtung der durch das Übertragungs- beziehungsweise Verbindungselement beschreibbaren theoretischen Verbindungsachse zwischen den beiden Stegelementen charakterisiert. Das einzelne Übertragungsbeziehungsweise Verbindungselement oder lediglich ein Teil der Übertragungsbeziehungsweise Verbindungselemente dient der Lagerung der Planetenräder sowie drehfester Kopplung der beiden Stegelemente. Die die Kontaktbereiche bildenden Teilflächen der Kontaktflächen erstrecken sich dabei im unbelasteten Zustand, d.h. frei von Drehmomentübertragung über einen Teil der jeweils zueinanderweisenden Stirnseiten von Stegelement und Übertragungselement. Die sich an diese anschließende Fläche der zueinanderweisenden Stirnseiten von Stegelement und Übertragungselement ist in diesem Funktionszustand frei von einer Berührung miteinander. Die Kontaktbereiche werden dabei im verspannten Zustand zwischen Steg- und Übertragungselement und unbelastetem Zustand der Stegeinheit, d.h. im montierten Zustand und frei von Drehmomentübertragung, durch das Zusammenwirken zwischen der Profilierung und dem zu dieser gerichteten Teil der Kontaktfläche am anderen Element - Stegelement oder Übertragungselement - gebildet. Dabei erfolgt ein Anliegen im verspannten Zustand zwischen den zueinander gerichteten Flächen zwischen Übertragungselement und Stegeinheit nur im Bereich der Profilierung. Im sich daran anschließenden Bereich erfolgt in diesem Funktionszustand keine Kontaktierung, sondern erst unter Belastung der Stegeinheit.

Die erfindungsgemäße Lösung verhindert somit mit einfachen Mitteln ein Auseinanderklaffen der einzelnen Bauelemente im Kontaktbereich bei Verformung der Stegelemente und gewährleistet eine steife Stegkonstruktion und damit optimale Bedingungen für die Lagerung der Planetenräder, um die Breitentragfähigkeit der Verzahnung in allen Funktionszuständen zu sichern. Die Profilierung ermöglicht neben einer äußeren Anlage der Kontaktflächen auch eine gleichmäßige Anlage und damit ein Verteilen der notwendigen Kraft zum Verpressen auf eine größere Fläche. Dadurch lassen sich einerseits größere Kräfte zum Verpressen realisieren, ohne infolge teilweisem Erreichen oder Überschreiten der Fließgrenzen vor allem erst unter Last die Gefahr des Setzens und damit des Lockems der Verbindung einzugehen. Auch können mit dieser Lösung niederfeste Werkstoffe zum Einsatz gelangen, beispielsweise Aluminium. Auch bei aus Prozesssicherheit eingestellter äußerer Anlage des Bolzens ist aufgrund der größeren Fläche und aufgrund der besseren Abstützung die zu ertragende Pressung nach der Montage und vor allem im Betrieb geringer. Damit ist eine geringere Belastung der Werkstoffe zu erwarten.

Die Profilierung kann dabei am Stegelement und/oder am Übertragungselement ausgeführt sein. Gemäß einer Weiterentwicklung kann diese auch durch ein Zwischenelement erzeugt werden, welches zwischen Übertragungselement bzw. den durch Querschnittsveränderung gebildeten und zu den Stegelementen gerichteten Kontaktflächen und den Stegelementen angeordnet ist und das Übertragungs- beziehungsweise Verbindungselement in Umfangsrichtung wenigstens teilweise umschließt und an seiner, jeweils direkt zu einem Stegelement gerichteten Simseite eine Kontaktfläche bildet. Die Kontaktbereiche bestehen dabei jeweils zwischen Stegelement und Zwischenelement und Zwischenelement und Übertragungselement. Auch hier ist wenigstens eine der Flächen eines mit einem Zwischenelement gebildeten Kontaktbereiches mit einer Profilierung versehen. Die Profilierung ist ebenfalls im radial äußeren Bereich durch mindestens einen Bereich größerer axialer Erstreckung als in Richtung der durch das Übertragungselement theoretischen Verbindungsachse zwischen den beiden Stegelementen charakterisiert. Vorzugsweise liegt jedes Zwischenelement im jeweils anderen Kontaktbereich am benachbarten Element vollständig an. Das Zwischenelement wird vorzugsweise zwischen Übertragungselement und Stegelement geklemmt oder aber mittels Pressverbindung mit dem Übertragungselement verbunden.

Die Lösung mit dem Zwischenelement bietet den Vorteil, daß hier standardisierte Übertragungselemente und Stegelemente verwendet werden können und keine zusätzliche Bearbeitung dieser erforderlich ist und lediglich durch die Wahl des Zwischenelementes auch Verformungen unterschiedlicher Größe ausgeglichen werden können.

Die Profilierung kann durch stetige Querschnittsänderung im Bereich einer Kontaktfläche in Richtung der theoretischen Verbindungsachse oder aber auch sprungartige Änderung erfolgen. Die Profilierung ist beispielsweise als in axialer Richtung ausgerichteter Vorsprung oder aber im Querschnitt von Stegelement, Übertragungselement oder Zwischenelement betrachtet durch in Richtung der durch das Übertragungselement charakterisierten theoretischen Verbindungsachse ausgeführte Querschnittsverjüngung ausgebildet.

Das Übertragungs- beziehungsweise Verbindungselement kann verschiedenartig ausgeführt sein. Die unterschiedlichen radialen Abmessungen am Außenumfang werden durch Ausgestaltung eines Stufenbolzen realisiert. Dieser kann dabei als integrale Baueinheit oder aber aus mehreren Einzelteilen gebildet werden. Im ersten Fall richtet sich die Ausführung des Stufenbolzens nach der Art der Befestigung. Diese kann durch entsprechende Ausgestaltung an wenigstens einem Endbereich des Stufenbolzens mit einem Gewinde durch Fixierung mittels beispielsweise einer Ringmutter erfolgen. Eine andere Ausführung besteht darin, wenigstens einen Teilbereich im Endbereich mit einem Innengewinde zu versehen, welches in Einbaulage sich in die Stegelemente hineinerstreckt. Die Fixierung kann dann über dem Stegelement zugeordnete Deckelscheibe erfolgen, welche eine Durchgangsöffnung zur Führung eines Befestigungselementes, beispielsweise in Form einer Schraube enthält, wobei bei beidseitiger Ausführung der Endbereiche des Stufenbolzens auf diese Art eine Verspannung herbeigeführt werden kann. Vorzugsweise werden jedoch Verspannungen mit durch den Stufenbolzen geführten Spannelementen realisiert. Dazu ist der Stufenbolzen in diesem Fall zwar einteilig, jedoch als Stufenbolzenhülsenelement ausgeführt. Durch diese kann eine Spannschraube geführt werden, welche sich entweder direkt in einem Stegelement oder einem Zwischenelement abstützt und am anderen Stegelement mittels einer Ringmutter gesichert wird. Eine andere Möglichkeit besteht darin, durch die Hülse einen Spannbolzen zu führen, wobei dieser beidseitig über entsprechende Ringmuttern gesichert wird.

Bei mehrteiliger Ausführung des Stufenbolzens umfasst dieser beispielsweise eine erste Lagerhülse, die vorzugsweise durch einen, über seine axiale Erstreckung unveränderlichen Durchmesser charakterisiert ist und eine weitere zweite Lagerbuchse, die zur Lagerung des Planetenrades dient und die den Bereich größerer radialer Abmessung beschreibt. Die zweite Lagerbuchse wird dabei auf die erste Lagerbuchse aufgezogen. Zwischen beiden wird vorzugsweise eine Presspassung gewählt. Auch hier bestehen die Möglichkeiten zur Realisierung der axialen Verspannung zwischen den beiden Stegelementen durch Führung einer Spannschraube oder eines Spannbolzens oder entsprechender Sicherung beidseitig der Stegelemente. Die konkrete Ausgestaltung für den Einzelfall liegt dabei im Ermessen des zuständigen Fachmannes.

Die erfindungsgemäße Lösung wird nachfolgend anhand von Figuren erläutert. Darin ist im einzelnen folgendes dargestellt:
- Fig.1a - 1c: verdeutlicht anhand eines Ausschnittes aus einem Steg eines Planetenradsatzes eine erste erfindungsgemäße Ausführung der Profilierung der Kontaktflächen der leistungsübertragenden Elemente;
- Figur 2a, Figur 2b: verdeutlichen die Grundproblematik der Verformungen der Einzelelemente des Steges bei der Leistungsübertragung;
- Figur 3: zeigt eine weitere erfindungsgemäße Ausführung der Profilierung der Kontaktflächen der miteinander in Wirkverbindung tretenden Elemente eines Steges in Form einer Profilierung der Stegelemente;
- Figur 4: zeigt anhand eines Ausschnittes aus einem Steg eine weitere Ausgestaltung der Profilierung der Kontaktflächen der einzelnen miteinander in Wirkverbindung tretenden Elemente eines Steges am Beispiel der Profilierung mittels Zwischenstück;
- Figur 5a, Figur 5b: verdeutlichen Möglichkeiten zur axialen Kopplung und Verspannung mit einem Übertragungselement in Form eines einteiligen Stufenbolzens;
- Fig. 6a - 6c: verdeutlichen Möglichkeiten zur axialen Kopplung und Verspannung mit einem Übertragungselement in Form eines mehrteilig ausgeführten Stufenbolzens.

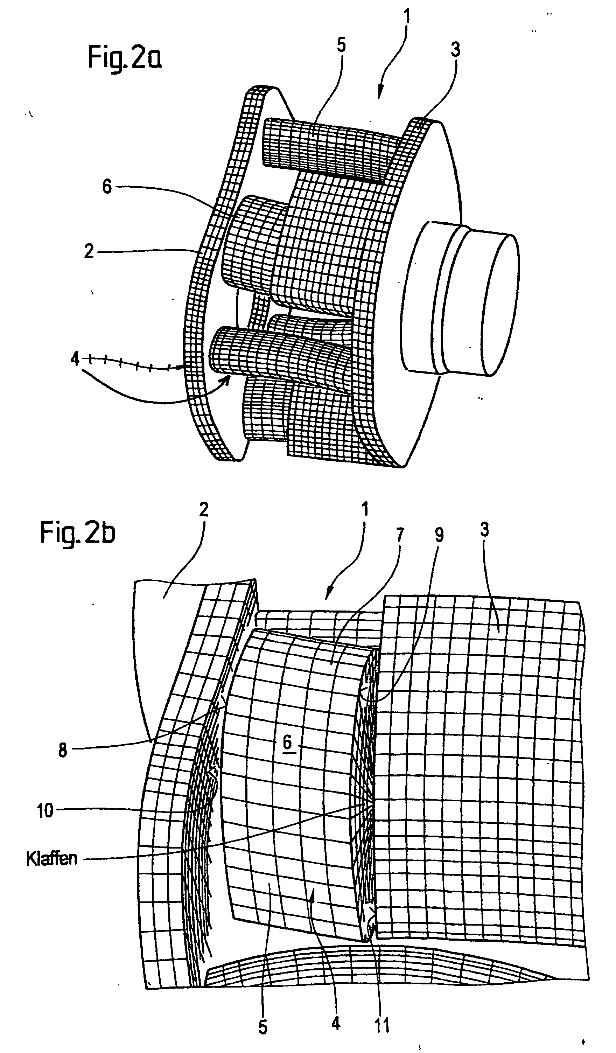

Die Figuren 2a und 2b verdeutlichen anhand einer Ausführung eines Steges 1 gemäß dem Stand der Technik die Problematik der bei Leistungsübertragung auftretenden Verformungen an den einzelnen Elementen des Steges bei geteilter Stegausführung. Der Steg 1 umfasst dabei ein erstes Stegelement, welches als erste Wange 2 bezeichnet wird und mit der An- oder Abtriebseite beim Einsatz in einem Planetenradsatz in einem Antriebsstrang koppelbar ist, und ein zweites Stegelement, welches als zweite Wange 3 bezeichnet wird. Die zweite Wange 3 ist dabei entsprechend der Anbindung der ersten Wange an die An- oder Abtriebseite mit der Ab- oder Antriebseite koppelbar. Die beiden Wangen - erste Wange 2 und zweite Wange 3 - sind über Mittel 4 zur axialen Kopplung miteinander in axialer Richtung verbunden. Die Mittel 4 können dabei unterschiedlich ausgeführt sein. Im dargestellten Fall umfassen diese Übertragungs- beziehungsweise Verbindungselemente 5, welche vorzugsweise in gleichmäßigen Abständen in Umfangsrichtung der Wangen 2 und 3 betrachtet angeordnet sind. Diese übertragen Last von der antriebseitigen Wange zur abtriebseitigen Wange. Im dargestellten Fall fungiert dabei die erste Wange 2 als antriebseitige Wange und die zweite Wange 3 als abtriebseitige Wange. Dabei wird ein hoher Teil der Last über die Übertragungs- beziehungsweise Verbindungselemente 5 zur abtriebseitigen Wange übertragen, wodurch eine Verformung der antriebsseitigen Wange 2 verursacht wird. Bei gesteigerter Leistungsübertragung kann dies zusätzlich zu einem Klaffen zwischen den Übertragungs- beziehungsweise Verbindungselementen 5 und den Wangen, insbesondere der ersten Wange 2 führen. Dieses Klaffen ist in vergrößerter Darstellung anhand eines Ausschnittes aus einer Ausführung eines geteilten Steges 1 gemäß Figur 2a dargestellt. Da die Übertragungselemente 5, welche in der Regel mit den beiden Wangen, erste Wange 2 und zweite Wange 3, verpresst sind, oder über andere Hilfsmittel in axialer Richtung mit den beiden Wangen - erste Wange 2 und zweite Wange 3 - verspannt sind, beim Einsatz in Planetenradsätzen auch die Planetenräder tragen, führt das Klaffen zu einer Verringerung der Gesamtsteifigkeit und das Breitentragen der Verzahnungen der Planetenräder wird verschlechtert. Auch eine deutliche Erhöhung der axialen Verpressung führt nur zu einer geringfügigen Verbesserung des Tragbildes.

Die Übertragungselemente 5 sind dabei in der Regel als Stufenbolzen 6 ausgeführt. Dabei ist der Bereich größeren Durchmessers 7 des Stufenbolzens 6 zwischen den beiden Wangen - erste Wange 2 und zweite Wange 3 - angeordnet. Der Bereich geringeren Durchmessers erstreckt sich durch die Wange. Die Stirnflächen 8 und 9 des Stufenbolzens 6 im Bereich des größeren Durchmessers 7 sind dabei jeweils zur ersten Wange 2 oder zweiten Wange 3 hin gerichtet. Diese bilden im verspannten Zustand der beiden Wangen - erste Wange 2 und zweite Wange 3 - die Kontaktflächen zu den zueinander hingerichteten Stirnflächen 10 und 11 an der ersten Wange 2 und der zweiten Wange 3. Gemäß Figur 2b wird dabei deutlich, daß das Klaffen insbesondere zwischen der miteinander unter axialer Verspannung in Wirkverbindung bringbaren Stirnfläche 9 und der Stirnfläche 11 der zweiten abtriebseitigen Wange 3 auftritt. Neben den dadurch bedingten Verformungen an den Anschlußelementen, das heißt erster Wange 2 und zweiter Wange 3, treten Probleme mit der Breitentragfähigkeit der Verzahnung auf.

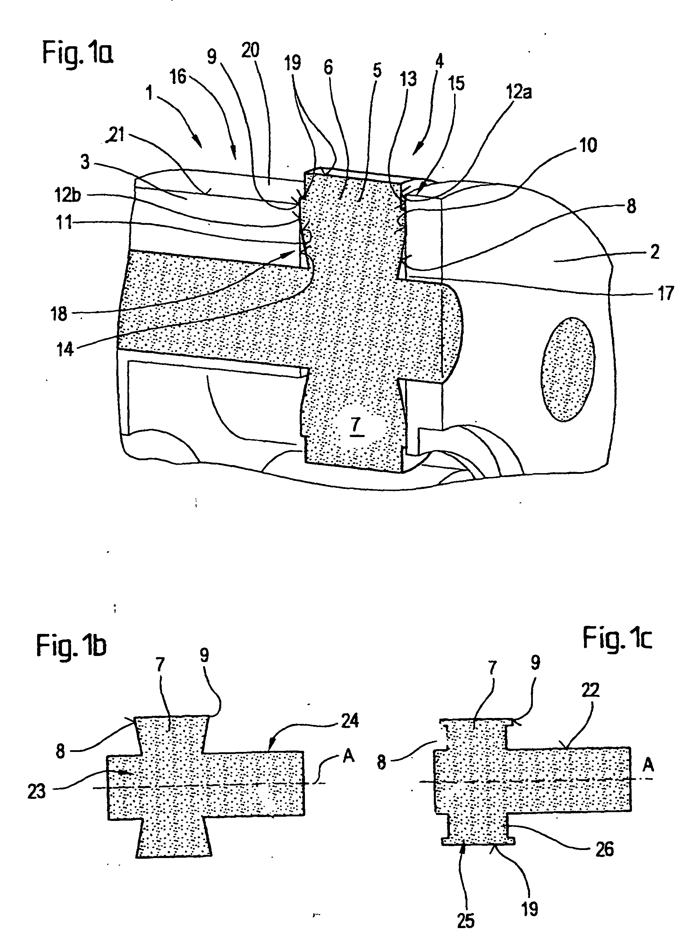

Die Figur 1a verdeutlicht anhand eines Ausschnittes eines geteilten Steges 1 in einer Schnittdarstellung durch ein Übertragungselement 5 eine erste Ausführung einer erfindungsgemäßen Ausgestaltung der Profilierung der Kontaktflächen der einzelnen miteinander unter Last in Wirkverbindung bringbaren Elemente des Steges 1. Der Grundaufbau entspricht dem bereits in der Figur 2 beschriebenen. Der Steg 1 umfasst dabei eine erste Wange 2 und eine zweite Wange 3, welche jeweils mit der An- oder Abtriebseite beim Einsatz in einem Planetenradsatz in einem Antriebsstrang koppelbar sind. Die beiden Wangen - erste Wange 2 und zweite Wange 3 - sind dabei in axialer Richtung miteinander mittels der Mittel 4 gekoppelt. Die Mittel 4 umfassen dabei Übertragungs- beziehungsweise Verbindungselemente 5, welche in Form von Stufenbolzen 6 ausgeführt sind. Der Stufenbolzen 6 umfasst dabei einen Bereich größeren Durchmessers 7, welcher in axialer Richtung an die beiden Wangen - antriebseitige Wange 2 und abtriebseitige Wange 3 - wenigstens mittelbar angrenzt, das heißt die in axialer Richtung ausgerichteten Stirnflächen 10 beziehungsweise 11 der anbeziehungsweise abtriebseitigen Wange 2 beziehungsweise 3 direkt oder indirekt berühren. Im dargestellten Fall fungieren dabei die Stirnflächen 8 und 9 im Bereich größeren Durchmessers 7 des Stufenbolzens 6 und die zueinanderweisenden Stirnflächen 10 und 11 der an- beziehungsweise abtriebseitigen Wange 2 und 3 direkt als Kontaktflächen. Die Kontaktflächen sind dabei mit 12a und 12b am Stufenbolzen bezeichnet, wobei die Kontaktfläche 12a im unbelasteten Zustand einem Teil der Stirnfläche 8 entspricht, während die mögliche Kontaktfläche 12b der Stirnfläche 9 entspricht. Die als Kontaktflächen an den an- beziehungsweise abtriebseitigen Wangenelementen fungierenden Flächen werden dabei von der Stirnfläche 10 der ersten Wange 2 in Form der Kontaktfläche 13 und der Stirnfläche 11 an der zweiten Wange 3 in Form der Kontaktfläche 14 gebildet. Die zueinanderweisenden Kontaktflächen, hier die Kontaktflächen 12a und 13 sowie die Kontaktflächen 12b und 14 beschreiben dabei im von Drehmomentbelastung freien Zustand, d.h. im montierten Zustand Kontaktbereiche 15 und 16, wobei der Kontaktbereich 15 durch die miteinander in Wirkverbindung bringbaren Flächenbereiche an den Kontaktflächen 12a und 13 beschreibbar ist, während der Kontaktbereich 16 durch die miteinander in Wirkverbindung bringbaren Flächenbereiche an den Kontaktflächen 12b und 14 zwischen dem Stufenbolzen 6 und der zweiten Wange 3 beschreibbar ist. Erfindungsgemäß ist wenigstens ein Element zur Realisierung des Kontaktbereiches 15 beziehungsweise 16 mit einer Profilierung versehen. Diese Profilierung ist gemäß der ersten erfindungsgemäßen Ausführung am Stufenbolzen 6 im Bereich des Bereiches größeren Durchmessers 7 vorgesehen. Die Profilierung ist dabei derart ausgeführt, daß diese einteilig mit dem Bereich größeren Durchmessers 7 am Stufenbolzen 6 verbunden ist. Bezüglich der Ausführung der Profilierung bestehen eine Vielzahl von Möglichkeiten. Die Figur 1 a verdeutlicht dabei eine Ausführung mit einer Profilierung 17 beziehungsweise 18 an den Kontaktflächen 12a beziehungsweise 12b im Bereich größeren Durchmessers 7 des Stufenbolzens 6. Diese ist dabei derart ausgeführt, daß diese im Querschnitt in axialer Richtung betrachtet in radialer Richtung vom Bereich des äußeren Durchmessers 19 des Bereiches größeren Durchmessers 7 des Stufenbolzens zur Achse A des Stufenbolzens 6 beziehungsweise zum geringeren Durchmesser hin verjüngend ausgeführt ist. Dabei ist es nicht erforderlich, daß die Profilierung sich vom Bereich des Außenumfanges 19 im Bereich größeren Durchmessers bis zum Außenumfang 22 (Fig.1) im Bereich geringeren Durchmessers beziehungsweise geringerer Abmessungen in radialer Richtung des Übertragungselementes 5 erstreckt. Wesentlich ist lediglich, daß sich die Profilierung in Einbaulage im Steg 1 in radialer Richtung betrachtet über einen Teilbereich der möglichen Kontaktfläche 13 beziehungsweise 14 an der antriebseitigen Wange 2 beziehungsweise der abtriebseitigen Wange 3 erstreckt, wobei jedoch unter Last eine Berührung der Stirnfläche 8 beziehungsweise 9 im Bereich größeren Durchmessers des Stufenbolzens 6 mit den Stirnflächen 10 beziehungsweise 11 der ersten Wange 2 beziehungsweise zweiten Wange 3 vermieden wird. Vorzugsweise wird jedoch, wie in der Figur 1 a dargestellt, die Profilierung derart ausgebildet, daß diese sich in radialer Richtung in Einbaulage im Querschnitt betrachtet über die radiale Erstreckung wenigstens eines der miteinander zu koppelnden Elemente - erster Wange 2 oder zweite Wange 3 - im Kontaktbereich 15 beziehungsweise 16 erstreckt. Im dargestellten Fall betrifft dies die Profilierung 18, welche in radialer Richtung einen größeren Außendurchmesser 20 aufweist als der Außendurchmesser 21 der zweiten Wange 3 im Kontaktbereich 16.

Die Figuren 1b und 1c verdeutlichen weitere mögliche Ausführungen einer Profilierung der Kontaktflächen an den Stirnflächen 8 beziehungsweise 9 im Bereich des Bereiches größeren Durchmessers 7 des als Stufenbolzen 6 ausgeführten Übertragungs- beziehungsweise Verbindungselementes 5. Dabei kann die gesamte Stirnfläche 8 beziehungsweise 9 als Kontaktfläche fungieren oder lediglich nur ein Teilbereich. Gemäß der Figur 1b ist die Profilierung derart ausgeführt, daß das Übertragungs- beziehungsweise Verbindungselement im Bereich größeren Durchmessers 7 für den vorstehenden Teil im wesentlichen einen trapezförmigen Querschnitt aufweist, wobei der Bereich größeren Durchmessers 7 vom Außenumfang 19 zur Achse A des Übertragungselementes hin eine Verjüngung erfährt. Die Verjüngung erstreckt sich dabei bis zum Außenumfang 22 des Übertragungselementes 5, insbesondere des Stufenbolzens 6 im vom Bereich größeren Durchmessers 7 freien Bereich 23 beziehungsweise 24. Das heißt, der vom Bereich größeren Durchmessers 7 gebildete vorstehende Teil weist im Querschnitt in axialer Richtung am Außenumfang 19 größere Abmessungen auf als am Außenumfang 22 des vom Bereich 7 freien Bereiches 23.

Die Figur 1c verdeutlicht eine weitere Ausführung der Profilierung der Kontaktflächen 12a beziehungsweise 12b, welche beispielsweise von den Stirnflächen 8 und 9 gebildet werden. Diese ist im Querschnitt betrachtet durch einen Bereich größerer axialer Erstreckung 25 im radial äußeren Bereich, das heißt im Bereich des Außenumfanges 19 des vorstehenden Teiles am Stufenbolzen 6 ausgebildet und weist des weiteren einen Bereich geringerer axialer Erstreckung 26 auf, welcher in radialer Richtung zwischen dem Außenumfang 22 des vom Bereich größeren Durchmessers 7 freien Bereiches 23 beziehungsweise 24 und dem Bereich größerer axialer Erstreckung 25 angeordnet ist. Der Bereich größerer axialer Erstreckung 25 wird dabei von in Umfangsrichtung ausgebildeten, vorzugsweise über den gesamten Umfang verlaufende und in axialer Richtung im Querschnitt betrachtet in Einbaulage zu den Wangen gerichteten Vorsprünge gebildet.

Die Figuren 1a bis 1c verdeutlichen lediglich das Grundprinzip der erfindungsgemäßen Anordnung einer Profilierung an den als Kontaktflächen fungierenden Stirnflächen 8 beziehungsweise 9 des Stufenbolzens 6 beim Einsatz als Übertragungselement 5 in einer geteilten Stegausführung 1. Andere Profilierungen sind ebenfalls denkbar. Wesentlich ist lediglich, daß die Profilierung im radial äußeren Bereich des Übertragungselementes 5 eine größere axiale Erstreckung aufweist, als im radial inneren Bereich. Konkrete Ausgestaltungen der Profilierungen liegen dabei entsprechend des Einsatzerfordemisses und der Möglichkeiten der Herstellung im Ermessen des zuständigen Fachmannes.

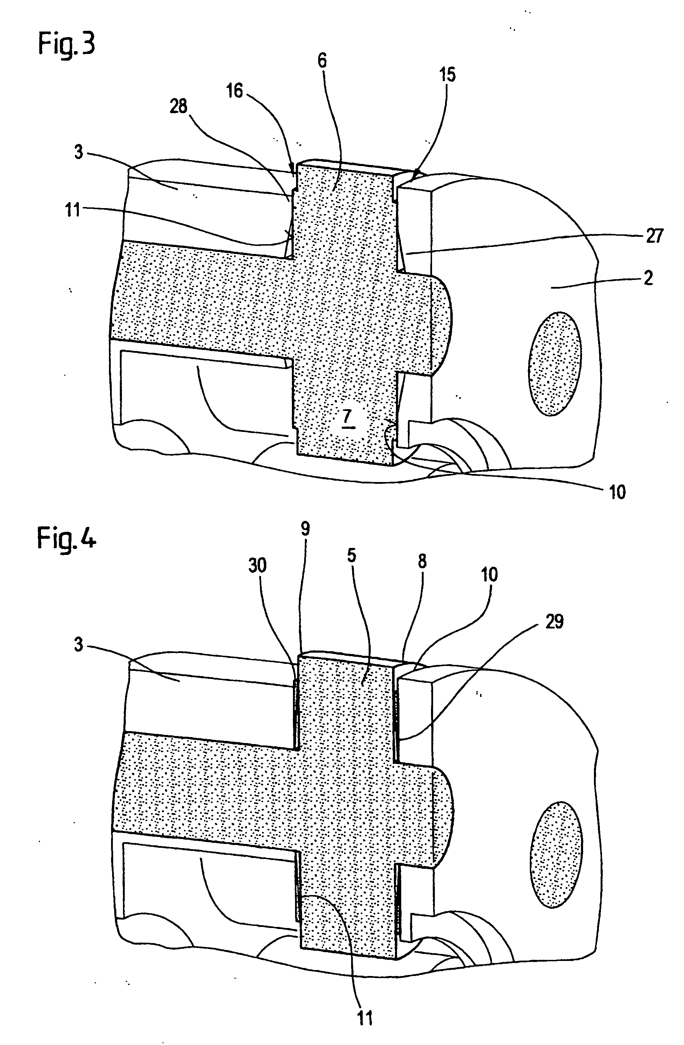

Die Figur 3 verdeutlicht eine weitere zweite Ausführung der Möglichkeit des Vorsehens einer profilierten Ausgestaltung der Kontaktflächen der miteinander zu koppelnden Elemente einer geteilten Stegausführung 1. Der Grundaufbau des Steges entspricht im wesentlichen dem in den Figuren 1 und 2 beschriebenen, weshalb für gleiche Elemente die gleichen Bezugszeichen verwendet werden. Gemäß der zweiten Ausführung ist es vorgesehen, die Profilierung im Kontaktbereich 15 beziehungsweise 16 zwischen dem Bereich größeren Durchmessers 7 am Stufenbolzen 6 und der ersten Wange 2 beziehungsweise der zweiten Wange 3 an den Wangen 2 beziehungsweise 3 vorzusehen. Das Profil, hier mit 27 beziehungsweise 28 bezeichnet, ist dabei jeweils an der Stirnfläche 10 der ersten Wange 2 und der Stirnfläche 11 der zweiten Wange 3 angeordnet. Die Profilierung ist dabei derart ausgeführt, daß im radial äußeren Bereich der Wangen 2 und 3 diese eine größere axiale Erstreckung aufweisen, als im radial inneren Bereich. In einer Ansicht im Querschnitt bedeutet dies, daß die erste Wange 2 beziehungsweise die zweite Wange 3 in radialer Richtung zur Achse der Übertragungs- beziehungsweise Verbindungselemente A hin verjüngend ausgeführt sind. Die Profilierung 27 beziehungsweise 28 kann dabei in Umfangsrichtung durch einen sich in Umfangsrichtung erstreckenden Vorsprung gebildet werden oder aber durch eine Vielzahl von derartigen Vorsprüngen, das heißt es werden eine Mehrzahl von einzelnen Kontaktflächen in Umfangsrichtung gebildet, die mit den Kontaktflächen 12a beziehungsweise 12b am Übertragungselement 5, insbesondere dem Stufenbolzen 6 in Wirkverbindung treten. Diese Wirkverbindung wird dabei durch eine Mehrzahl von Flächenkontakten ermöglicht. Vorzugsweise wird jedoch eine Ausführung gewählt, welche in Umfangsrichtung betrachtet eine ebene Kontaktfläche an den Stirnflächen 10 beziehungsweise 11 der Wangen 2 beziehungsweise 3 bildet.

Die Figur 4 verdeutlicht eine dritte Möglichkeit einer profilierten Ausführung der miteinander gekoppelten und in Wirkverbindung tretenden Elemente einer geteilten Stegausführung 1. Der Grundaufbau entspricht ebenfalls dem in den Figuren 1 bis 3 beschriebenen, weshalb für gleiche Elemente die gleichen Bezugszeichen verwendet werden. Bei der in der Figur 4 dargestellten Ausführung erfolgt die Realisierung der Kontaktierung über profilierte Kontaktflächen mit Hilfe jeweils eines Zwischenelementes 29 beziehungsweise 30 zwischen den miteinander in Wirkverbindung bringbaren Flächenbereichen an den Stirnflächen 8 am Übertragungselement 5 und 10 an der ersten Wange 2 beziehungsweise dem Zwischenelement 30 an der Stirnfläche 9 am Übertragungselement 5 und 11 an der zweiten Wange 3. Diese Ausführung ermöglicht es, konventionelle unmodifizierte Stufenbolzen 6 einzusetzen und trotzdem den mit der erfindungsgemäßen Lösung zu erzielenden Effekt einer größeren Steifigkeit der Stegausführung zu ermöglichen. Diese Lösung zeichnet sich daher durch einen geringen konstruktiven und fertigungstechnischen Aufwand aus und kann ohne erheblichen Mehraufwand in bereits vorhandene geteilte Stegausführungen integriert werden.

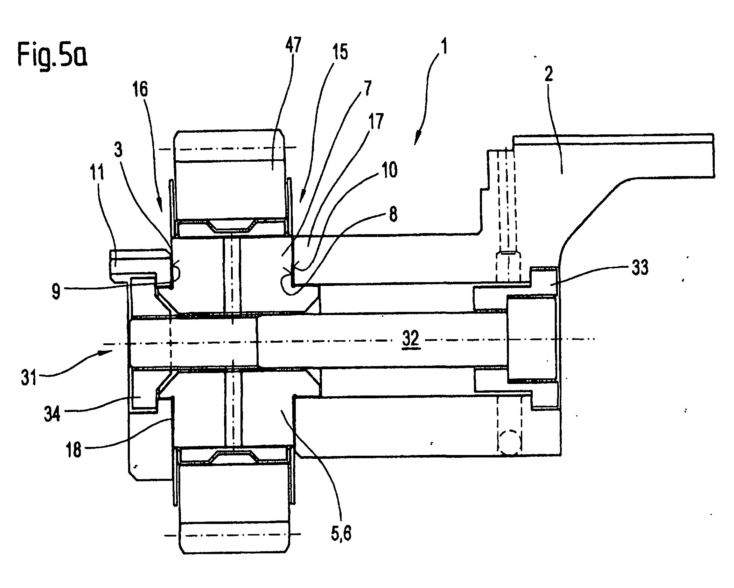

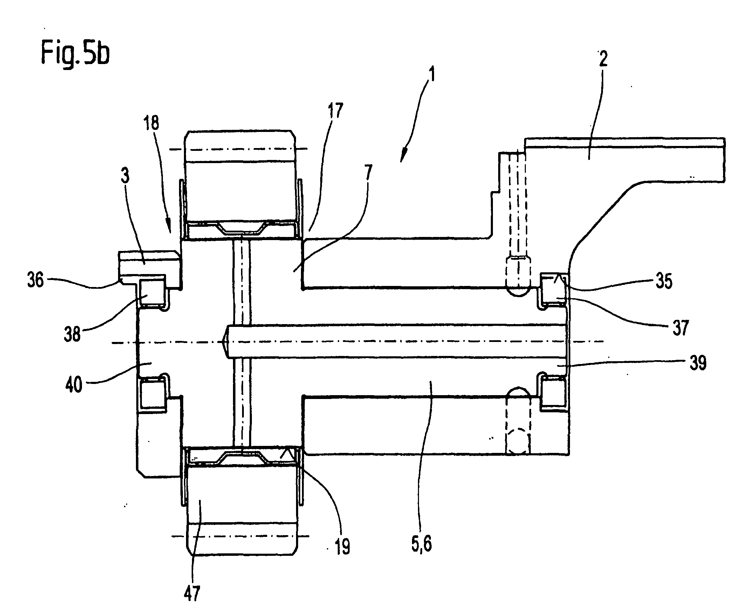

Die Figuren 5a und 5b verdeutlichen anhand einer Schnittdarstellung Möglichkeiten zur Realisierung der axialen Verbindung zweier Stegelemente über ein Übertragungselement 5 in Form eines Stufenbolzens 6 und zur axialen Verspannung. Das Übertragungselement 5 ist hier als einteiliger Stufenbolzen 6 ausgeführt. Dieser weist einen Bereich radial größeren Durchmessers 7 auf, wobei aufgrund der Querschnittsänderungen dieser Bereich die beiden Stirnflächen 10 und 11 bildet. Die Stirnflächen kommen an den Stirnflächen 8 und 9 der beiden Stegeelemente 2 und 3 in den Kontaktbereichen 15 und 16 zum Anliegen. Im dargestellten Fall ist der Stufenbolzen 6 mit einer Profilierung 17 beziehungsweise 18 an den entsprechenden Stirnflächen 10 und 11 ausgeführt. Der Stufenbolzen trägt dabei ein Planetenrad 47. Die axiale Verspannung zwischen dem Übertragungs- beziehungsweise Verbindungselement 5 und den Stegelementen 2 und 3 wird über Mittel 31 zur axialen Verspannung realisiert, wobei die Mittel 31 im dargestellten Fall eine Schraube 32, welche durch die beiden Stegelemente 2 und 3 und den Stufenbolzen 6 geführt ist und sich an einem Stegelement, hier dem Stegelement 2 direkt oder wie hier dargestellt indirekt über ein Zwischenelement 33, welches die Lage der Schraube 32 in axialer Richtung zum Stegelement 3 hin fixiert und die Verschiebbarkeit in dieser Richtung begrenzt. Zur Verspannung ist ferner eine Deckscheibe 34 vorgesehen, welche am Stegelement 3 anliegt und ein Innengewinde aufweist. Die Ausführung gemäß Figur 5a verdeutlicht eine Ausführung mit Profilierung am Übertragungselement 5. Denkbar ist jedoch auch eine zusätzliche oder alternative Ausführung der Profilierung an den Stirnseiten 8 und 9 der Stegelemente 2 beziehungsweise 3.

Die Figur 5b verdeutlicht eine weitere Ausgestaltungsmöglichkeit einer Stegeinheit 1, umfassend zwei Stegelemente 2 und 3 mit einem Übertragungsbeziehungsweise Verbindungselement 5 in Form eines Stufenbolzens 6. Der Stufenbolzen 6 ist hier ebenfalls einteilig ausgeführt und erstreckt sich in axialer Richtung in Einbaulage jeweils in die Stegelemente 2 und 3 hinein, welche zu diesem Zweck Durchgangsöffnungen 35 und 36 aufweisen. Die Sicherung und axiale Verspannung erfolgt bei dieser Ausführung durch Verschraubung mittels sogenannten Ringmuttern 37 beziehungsweise 38, welche beidseitig auf die Endbereiche 39 beziehungsweise 40 des Stufenbolzens 6 aufgeschraubt werden. Zu diesem Zweck ist der Stufenbolzen 6 in seinen beiden Endbereichen 39 und 40 als Zapfen ausgeführt, welcher mit einem Gewinde versehen ist und auf welchen eine Ringmutter 37 beziehungsweise 38 aufgeschraubt werden kann, die sich an dem Stegelement 2 beziehungsweise 3 abstützt. Auch hier ist die Profilierung 17 beziehungsweise 18 am Übertragungs- beziehungsweise Verbindungselement 5 ausgebildet und im dargestellten Fall durch eine stetige Querschnittsverringerung in axialer Richtung betrachtet vom radial äußeren Umfang 19 in Richtung der theoretischen Verbindungsachse des Verbindungselementes verjüngend ausgeführt. Auch hier kann alternativ oder zusätzlich eine entsprechende Profilierung an den Stegelementen 3 und 2 vorgesehen werden.

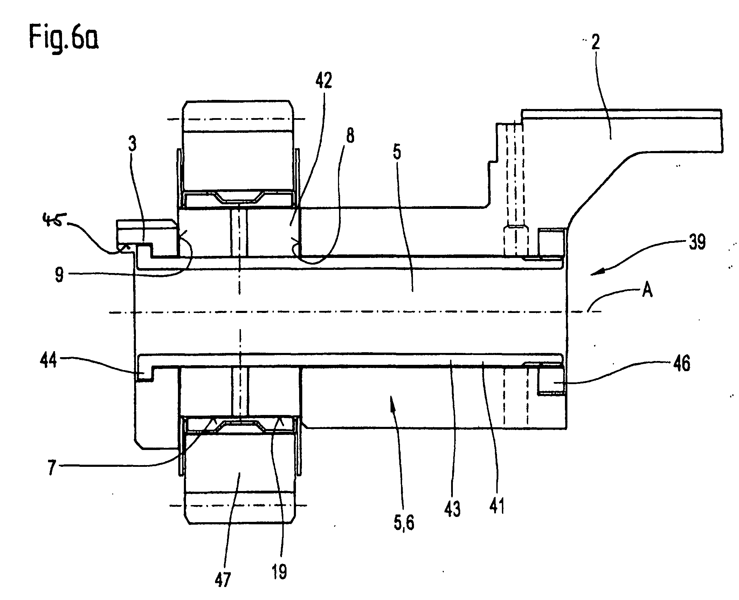

Die Figuren 6a bis 6c verdeutlichen dem gegenüber Ausführungen mit einem Übertragungs- beziehungsweise Verbindungselement 5 in Form eines Stufenbolzens 6, wobei dieser jedoch mehrteilig ausgeführt ist. Bei der Ausführung gemäß Figur 6a umfasst der Stufenbolzen 6 eine erste Lagerhülse 41 und eine zweite Lagerhülse 42. Die erste Lagerhülse 41 erstreckt sich dabei in axialer Richtung bis jeweils in den Bereich der axialen Erstreckung der beiden Stegelemente 2 und 3 oder auch über diese hinaus. Im dargestellten Fall ist die erste Lagerhülse 41 als zylindrisches Element 43 ausgeführt, welches im Bereich eines seiner beiden Enden einen zylindrischen Absatz 44 in Form eines Flansches aufweist. Der durch den zylindrischen Absatz 44 gebildete Vorsprung dient dabei zur Abstützung an einer der beiden Stegelemente 2 oder 3, im dargestellten Fall am Stegelement 3, wobei dieser in eine Ausnehmung in Form einer Bohrung 45 eingreift. Im gegenüberliegenden Endbereich 39 weist die Lagerhülse 41 ein Gewinde auf, wobei dies im dargestellten Fall als Außengewinde ausgeführt ist, auf welches eine Ringmutter 46 aufgezogen werden kann, die sich wiederum am Stegelement 2 abstützt. Die zweite Lagerhülse 42 bildet den Bereich größeren radialen Durchmessers 7, wobei dieser auch der Lagerung des Planetenrades 47 dient. Zwischen der Lagerhülse 41 und der Lagerhülse 42 ist eine Presspassung vorgesehen. Die Lagerhülse 42 trägt im dargestellten Fall eine Profilierung, welche im einfachsten Fall durch eine stetige Verjüngung der axialen Abmessungen in radialer Richtung vom Außenumfang 19 in Richtung der Achse A des Übertragungs- beziehungsweise Verbindungselementes 5 charakterisiert ist. Denkbar ist hier auch eine Ausgestaltung der beiden zueinander weisenden Stirnseiten 8 und 9 der beiden Stegelemente 2 und 3 mit einer entsprechenden Profilierung. Die Profilierung kann dabei wie in den Figuren 1 a bis 1 c ausgeführt sein.

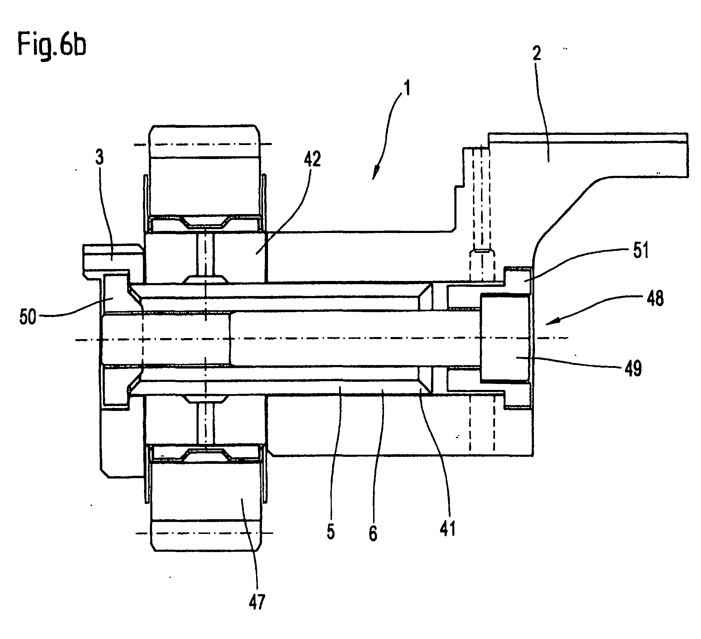

Die Figur 6b verdeutlicht eine weitere Ausgestaltung des Übertragungsbeziehungsweise Verbindungselementes 5 in Form eines mehrteilig ausgeführten Stufenbolzens 6 zwischen zwei Stegelementen 2 und 3. Die axiale Kopplung und Verspannung wird dabei über entsprechende Befestigungsmittel 48 realisiert, welche im dargestellten Fall eine Schraube 49 und zur Verspannung der Schraube beziehungsweise Sicherung eine Mutter 50 umfassen. Auch hier besteht das Übertragungs- beziehungsweise Verbindungselement 5 aus einer ersten Lagerhülse 41 und einer zweiten Lagerhülse 42, wobei beide Lagerhülsen in radialer Richtung gegeneinander verspannt sind, vorzugsweise in Form einer Querpressverbindung. Die Lagerhülse 41 erstreckt sich dabei in Einbaulage in den Bereich der axialen Erstreckung in eine entsprechende Durchgangsöffnung des ersten Stegelementes 2 und des zweiten Stegelementes 3 hinein. Die Verbindungsschraube stützt sich hierbei über ein Zwischenelement 51 am ersten Stegelement 2 ab. Die Verspannung wird dann mittels der Ringmutter 50 realisiert, welche am anderen Stegelement 3 zum Anliegen kommt. Auch hier wird die Profilierung am Übertragungselement 5 ausgebildet, im einzelnen an der zweiten Lagerhülse 42, welche der Lagerung eines Planetenrades 47 dient.

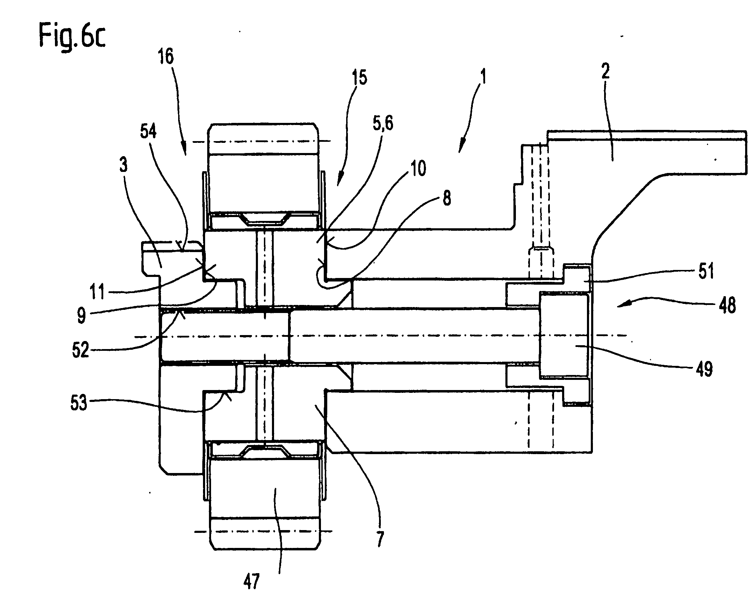

Die Figur 6c verdeutlicht eine weitere Möglichkeit zur Realisierung der axialen Kopplung und Verspannung der Elemente Stegelement 2, Stegelement 3 und Übertragungs- beziehungsweise Verbindungselement 5, welches hier als Stufenbolzen 6 einteilig ausgeführt ist. Dieser trägt im Bereich größeren radialen Durchmessers 7 das Planetenrad 47 und erstreckt sich im Bereich geringeren radialen Durchmessers in eines der Stegelemente 2 oder 3, im dargestellten Fall 2 in eine entsprechende Durchgangsöffnung hinein. Die Verspannung erfolgt über Befestigungsmittel 48, umfassend eine Schraube 49, die sich über ein Zwischenelement 51 oder auch direkt am Stegelement 2 abstützt. Die Funktion der Ringmutter übernimmt das Stegelement 3, indem dieses mit einer entsprechenden Bohrung, vorzugsweise Durchgangsöffnung 52 versehen ist, welche ein Innengewinde trägt. Im dargestellten Fall ist das Stegelement 3 derart ausgeführt, daß dieses mindestens zwei Bereiche unterschiedlichen Außendurchmessers 53 und 54 aufweist, wobei der Bereich geringeren Durchmessers 53 eine Abstützfläche für den Stufenbolzen 6 in radialer Richtung bildet. In axialer Richtung bildet der Stufenbolzen 6 mit seinen Stirnflächen 10 und 11 beziehungsweise den in diesem Bereich anliegenden Teilflächen an den Stirnseiten 8 und 9 der beiden Stegelemente 2 und 3 die Kontaktbereiche 15 und 16. Im dargestellten Fall weist ebenfalls wiederum der Stufenbolzen 6 die Profilierung an seinen beiden Stirnflächen 10 und 11 auf. Denkbar ist auch die Ausführung der Profilierung an den beiden Stegelementen 2 und 3.

Die Figuren 5 und 6 verdeutlichen mögliche Ausgestaltungen zur Realisierung der axialen Kopplung und Verspannung der einzelnen Elemente einer Stegeinheit 1 in Form der Stegelemente 2 und 3 und der Übertragungs- beziehungsweise Verbindungselemente 5 mittels Befestigungsmitteln gegeneinander. Diesbezüglich sind für die Variantenvielfalt keine Restriktionen gesetzt. Die konkrete Auswahl und die Kombination der einzelnen in den Figuren dargestellten Möglichkeiten liegt dabei im Ermessen des zuständigen Fachmannes.

### Bezugszeichenliste

- 1: Stegeinheit
- 2: erstes Stegelement; erste Wange
- 3: zweites Stegelement; zweite Wange
- 4: Mittel zur axialen Kopplung zwischen erster Wange und zweiter Wange
- 5: Übertragungselemente
- 6: Stufenbolzen
- 7: Bereich größeren Durchmessers am Stufenbolzen
- 8: Stirnseite
- 9: Stirnseite
- 10: Stirnfläche
- 11: Stirnfläche
- 12a, 12b: Kontaktfläche am Stufenbolzen
- 13: Kontaktfläche an der ersten Wange 2
- 14: Kontaktfläche an der zweiten Wange 3
- 15: Kontaktbereich
- 16: Kontaktbereich
- 17: Profilierung
- 18: Profilierung
- 19: Bereich des Außenumfanges im Bereich größeren Durchmessers 7 am Stufenbolzen 6
- 20: Außenumfang der Profilierung 17
- 21: Außenumfang der Profilierung 18
- 22: Außenumfang
- 23: vom Bereich 7 freier Bereich
- 24: vom Bereich 7 größeren Durchmessers freier Bereich
- 25: Bereich größerer axialer Erstreckung
- 26: Zwischenbereich
- 27: Profil
- 28: Profil
- 29: Zwischenelement
- 30: Zwischenelement
- 31: Mittel zur axialen Verspannung
- 32: Schraube
- 33: Zwischenelement
- 34: Deckscheibe
- 35: Durchgangsöffnung
- 36: Durchgangsöffnung
- 37: Ringmutter
- 38: Ringmutter
- 39: Endbereich
- 40: Endbereich
- 41: Lagerhülse
- 42: Lagerhülse
- 43: zylindrisches Element
- 44: zylindrischer Absatz
- 45: Ausnehmung
- 46: Ringmutter
- 47: Planetenrad
- 48: Befestigungsmittel
- 49: Schraube
- 50: Mutter
- 51: Zwischenelement
- 52: Durchgangsöffnung
- 53: Bereich
- 54: Bereich

## Patentansprüche

1. Stegeinheit (1) für Planetenradsätze zur Lagerung von Planetenrädern;
1.1 mit einem ersten Stegelement (2) und einem zweiten Stegelement (3), welche miteinander über sich in axialer Richtung erstreckende und eine theoretische Verbindungsachse beschreibende Übertragungselemente (5) drehfest gekoppelt und in axialer Richtung verspannbar sind;
1.2 jedes Übertragungselement (5) weist Bereiche (7) unterschiedlicher radialer Abmessungen auf, wobei die daraus gebildeten und zu den einzelnen Stegelementen (2, 3) gerichteten Stirnflächen (11, 10) dieser Bereiche jeweils Kontaktflächen (12a, 12b) - eine erste (12a) und eine zweite Kontaktfläche (12b) - bilden, welche direkt oder über ein Zwischenelement (29, 30) an von den zueinander weisenden Stirnseiten (8, 9) der Stegelemente (2, 3) gebildeten weiteren Kontaktflächen (13, 14) teilweise in Kontaktbereichen (15, 16) anliegen;
1.3 wenigstens eine Teilfläche einer Kontaktfläche (12a, 12b, 13, 14) eines Kontaktbereiches (15, 16) wird von einer Profilierung (17, 18) gebildet;
1.4 die Profilierung (17, 18) ist im radial äußeren Bereich (19) durch mindestens einen Bereich größerer axialer Erstreckung in Richtung der durch das Übertragungselement (5) theoretischen Verbindungsachse zwischen den beiden Stegelementen (2,3) charakterisiert, **gekennzeichnet durch** die folgenden Merkmale:
1.5 die weiteren Kontaktflächen (13, 14) entsprechen im unbelasteten Zustand der stegeinheit (1) einem Teil der stirnflächen (10,11).

2. Stegeinheit (1) nach Anspruch 1, **dadurch gekennzeichnet, daß** die Profilierung (17, 18) am Stegelement (2) ausgeführt ist.

3. Stegeinheit (1) nach Anspruch 1 oder 2, **dadurch gekennzeichnet, daß** die Profilierung (17, 18) am Übertragungselement (5) ausgeführt ist.

4. Stegeinheit (1) nach einem der Ansprüche 1 bis 3, **gekennzeichnet durch** die folgenden Merkmale:
4.1 das Übertragungselement (5) ist als Stufenbolzen (6) ausgeführt;
4.2 die Kontaktfläche (12a, 12b) am Stufenbolzen (6) wird direkt an den aufgrund der Querschnittsveränderung gebildeten Stirnflächen (10, 11) des Stufenbolzens (6) gebildet.

5. Stegeinheit (1) nach Anspruch 4, **dadurch gekennzeichnet, daß** das Übertragungselement (5) einteilig ausgeführt ist und die drehfeste Kopplung und Verspannung in axialer Richtung über Mittel (31) zur axialen Verspannung realisiert wird.

6. Stegeinheit (1) nach Anspruch 5, **gekennzeichnet durch** die folgenden Merkmale:
6.1 das Übertragungselement (5) erstreckt sich in seinen, vom Bereich größeren Durchmessers (7) freien Bereichen in Durchgangsöffnungen der Stegelemente (2, 3) wenigstens teilweise hinein oder über diese in axialer Richtung hinaus;
6.2 die Mittel (31) zur axialen Verspannung umfassen mindestens ein Schraubelement (32) und eine Ringmutter (34);
6.3 das Schraubelement (32) stützt sich im Bereich seines Kopfes an einem der Stegelemente (2, 3) ab und ist **durch** das erste Stegelement (2), das Übertragungselement (5) und das zweite Stegelement (3) geführt;
6.4 die Ringmutter (34) stützt sich am jeweils anderen Stegelement (3, 2) ab.

7. Stegeinheit (1) nach Anspruch 5, **gekennzeichnet durch** die folgenden Merkmale:
7.1 das Übertragungselement (5) erstreckt sich in seinen, vom Bereich größeren Durchmessers (7) freien Bereichen in Durchgangsöffnungen der Stegelemente (2, 3) wenigstens teilweise hinein oder über diese in axialer Richtung hinaus;
7.2 die Mittel (31) zur axialen Verspannung umfassen mindestens einen gewindetragenden Endbereich am Übertragungselement (5), welcher mit einer Ringmutter (38, 37) zusammenwirkt und sich am Stegelement (2, 3) abstützt.

8. Stegeinheit (1) nach Anspruch 4, **dadurch gekennzeichnet, daß** das Übertragungselement (5) aus mehreren Einzelelementen besteht und die drehfeste Kopplung und Verspannung in axialer Richtung über Mittel (31) zur drehfesten Kopplung und axialen Verspannung realisiert wird.

9. Stegeinheit (1) nach Anspruch 8, **gekennzeichnet durch** die folgenden Merkmale:
9.1 das Übertragungselement (5) umfaßt zwei Lagerhülsen, eine erste Lagerhülse (41) und eine zweite Lagerhülse (42);
9.2 eine der beiden Lagerhülsen (41, 42) - erste Lagerhülse (41) oder zweite Lagerhülse (42) - umschließt die jeweils andere Lagerhülse (42, 41) in Umfangsrichtung und bildet den Bereich größeren Durchmessers (7) des Übertragungselementes (5).

10. Stegeinheit (1) nach Anspruch 9, **dadurch gekennzeichnet, daß** die Mittel (31) zur axialen Verspannung mindestens einen, gewindetragenden Endbereich der ersten Lagerhülse (41) und eine, mit diesem zusammenwirkende Ringmutter umfassen, welche sich in axialer Richtung an einem Stegelement (2, 3) abstützt.

11. Stegeinheit (1) nach Anspruch 10, **dadurch gekennzeichnet, daß** der andere Endbereich der ersten Lagerhülse (41) einen zylindrischen Absatz (44) umfaßt, welcher sich in axialer Richtung an der vom Übertragungselement (5) weggerichteten Stirnseite des Stegelementes (40) abstützt.

12. Stegeinheit (1) nach einem der Ansprüche 9 bis 11, **dadurch gekennzeichnet, daß** die Mittel (31) zur axialen Verspannung ein Schraubelement (49) umfassen, welches sich in axialer Richtung durch die Lagerhülsen (41, 42) erstreckt und dessen Kopfelement sich an einem der Stegelemente (2, 3) abstützt, wobei die Sicherung am anderen Stegelement (3, 2) durch eine Ringmutter (50) erfolgt.

13. Stegeinheit (1) nach Anspruch 1 bis 12, **gekennzeichnet durch** die folgenden Merkmale:
13.1 das Übertragungselement (5) ist als Stufenbolzen (6) ausgeführt;
13.2 zwischen den aufgrund der Querschnittsveränderung gebildeten Stirnflächen (10, 11) und den Stegelementen (2, 3) ist jeweils mindestens ein Zwischenelement (29, 30) angeordnet, welches aufgrund seiner Ausgestaltung die Profilierung (17, 18) bildet.

14. Stegeinheit (1) nach einem der Ansprüche 1 bis 13, **dadurch gekennzeichnet, daß** die Profilierung (17, 18) durch eine sprungartige Querschnittsveränderung des eine Kontaktfläche (12a, 12b, 13, 14) bildenden Elementes (5, 6, 2, 3, 29, 30) erzeugt wird.

15. Stegeinheit (1) nach einem der Ansprüche 1 bis 14, **dadurch gekennzeichnet, daß** die Profilierung durch eine stetige Querschnittsveränderung des die Kontaktfläche (12a, 12b, 13, 14) bildenden Elementes (5, 6, 2, 3, 29, 30) erzeugt wird.

## Claims

1. A frame unit (1) for planet wheel sets for bearing planet wheels;
1.1. with a first frame element (2) and a second frame element (3) which are torsionally rigidly coupled with each other by way of axially extending transmission elements (5) describing a theoretical connecting axis;
1.2. with each transmission element (5) comprising regions (7) of different radial dimensions, with the face surfaces (11, 10) of these regions which are formed therefrom and are directed against the individual frame elements (2, 3) each forming contact surfaces (12a, 12b), namely a first (12a) and a second contact surface (12)b, which rest directly or via an intermediate element (29, 30) partly in contact regions (15, 16) on further contact surfaces (13, 14) formed by the mutually facing face sides (8, 9) of frame elements (2, 3);
1.3. with at least one partial surface of a contact surface (12a, 12b, 13, 14) of a contact region (15, 16) being formed by a profiling (17, 18);
1.4. the profiling (17, 18) is **characterized in** the radially outer region (19) by at least one region of larger axial extension in the direction of the connecting axis between the two frame elements (2, 3) which is theoretical by the transmission element (5);
**characterized by** the following features:
1.5. the further contact surfaces (13, 14) correspond in the unloaded state to the frame unit (1) to a part of the face surfaces (10, 11).

2. A frame unit (1) according to claim 1, **characterized in that** the profiling (17, 18) is arranged on the frame element (2).

3. A frame unit (1) according to claim 1 or 2, **characterized in that** the profiling (17, 18) is arranged on the transmission element (5).

4. A frame unit (1) according to one of the claims 1 to 3, **characterized by** the following features:
4.1 the transmission element (5) is configured as a step pin (6);
4.2 the contact surface (12a, 12b) on the step pin (6) is formed directly on the face surfaces (10, 11) of the step pin (6), which face surfaces are formed as a result of changes in the cross section.

5. A frame unit (1) according to claim 4, **characterized in that** the transmission element (5) is provided with an integral configuration and the torsionally rigid coupling and clamping in the axial direction is realized by means (31) for axial clamping.

6. A frame unit (1) according to claim 5, **characterized by** the following features:
6.1 the transmission element (5) extends in its regions which are free from the region of larger diameter (7) least partly into the pass-through openings of the frame elements (2, 3) or beyond the same in the axial direction;
6.2 the means (31) for axial clamping comprise at least one screw element (32) and a ring nut (34);
6.3 the screw element (32) rests in the region of its head on one of the frame elements (2, 3) is guided by the first frame element (2), the transmission element (5) and the second frame element (3);
6.4 the ring nut (34) rests on the respective other frame element (3, 2).

7. A frame unit (1) according to claim 5, **characterized by** the following features:
7.1 the transmission element (5) extends in its regions free from the region of larger diameter (7) at least partly into the pass-through openings (2, 3) or beyond the same in axial direction;
7.2 the means (31) for axial clamping comprise at least one thread-bearing end region on the transmission element (5), which end region cooperates with a ring nut (38, 37) and rests on the frame element (2, 3).

8. A frame unit (1) according to claim 4, **characterized in that** the transmission element (5) consists of several individual elements and the torsionally rigid coupling and clamping in the axial direction is realized through means (31) for the torsionally rigid coupling and axial clamping.

9. A frame unit (1) according to claim 8, **characterized by** the following features:
9.1 the transmission element (5) comprises two bearing sleeves, a first bearing sleeve (41) and a second bearing sleeve (42);
9.2 one of the two bearing sleeves (41, 42), first bearing sleeve (41) or second bearing sleeve (42), encloses the respective other bearing sleeve (42, 41) in the circumferential direction and forms the region of larger diameter (7) of the transmission element (5).

10. A frame unit (1) according to claim 9, **characterized in that** the means (31) for axial clamping comprise at least one thread-bearing end region of the first bearing sleeve (41) and a ring nut cooperating with the same, which ring nut rests in the axial direction on a frame element (2, 3).

11. A frame unit (1) according to claim 10, **characterized in that** the other end region of the first bearing sleeve (41) comprises a cylindrical shoulder (44) which rests in the axial direction on the face side of the frame element (40) averted from the transmission element (5).

12. A frame unit (1) according to one of the claims 9 to 11, **characterized in that** the means (31) for axial clamping comprises a screw element (49) which extends in the axial direction through the bearing sleeve (41, 42) and whose head element rests on one of the frame elements (2, 3), with the securing being made on the other frame element (3, 2) by a ring nut (50).

13. A frame unit (1) according to claim 1 to 12, **characterized by** the following features:
13.1 the transmission element (5) is configured as a step pin (6);
13.2 at least one intermediate element (29, 30) each is formed between the face surfaces (10, 11) formed as a result of the changes in cross section and the frame elements (2, 3), which intermediate element forms the profiling (17, 18) as a result of its configuration.

14. A frame unit (1) according to one of the claims 1 to 13, **characterized in that** the profiling (17, 18) is produced by a sudden change in cross section of the element (5, 6, 2, 3, 29, 30) forming a contact surface (12a, 12b, 13, 14).

15. A frame unit (1) according to one of the claims 1 to 14, **characterized in that** the profiling is produced by a continuous change in the cross section of the element (5, 6, 2, 3, 29, 30) forming a contact surface (12a, 12b, 13, 14).

## Revendications

1. Unité de porte-satellites (1) pour trains planétaires destinée à porter des pignons planétaires ;
1.1 avec un premier élément de porte-satellites (2) et un deuxième élément de porte-satellites (3) qui sont reliés l'un à l'autre de manière solidaire en rotation par des éléments de transmission (5) s'étendant axialement et décrivant un axe de liaison théorique, et qui peuvent être serrés ensemble suivant la direction axiale ;
1.2 chaque élément de transmission (5) comporte des zones (7) de dimensions radiales différentes, les surfaces frontales (11, 10) formées dans ces zones et dirigées vers chacun des éléments de porte-satellites (2, 3) formant chacune des surfaces de contact (12a, 12 b) - une première surface de contact (12a) et une deuxième surface de contact (12b) - qui sont en appui, soit direct soit par l'intermédiaire d'un élément intermédiaire (29, 30), contre d'autres surfaces de contact (13, 14) formées par les faces frontales (8, 9) des éléments de porte-satellites (2, 3) situées en regard l'une de l'autre, en partie dans des zones de contact (15, 16) ;
1.3 au moins une aire partielle d'une surface de contact (12a, 12b, 13, 14) d'une zone de contact (15, 16) est formée par un profilage (17, 18) ;
1.4 le profilage (17, 18) est **caractérisé**, dans la zone externe radiale (19), par au moins une zone d'extension axiale plus importante en direction de l'axe de liaison théorique décrit par l'élément de transmission (5) entre les deux éléments de porte-satellites (2, 3),
**caractérisée par** les particularités suivantes :
1.5 les autres surfaces de contact (13, 14) correspondent, lorsque l'unité de porte-satellites (1) est à l'état non chargé, à une partie des surfaces frontales (10, 11).

2. Unité de porte-satellites (1) selon la revendication 1, **caractérisée en ce que** le profilage (17, 18) est exécuté sur l'élément de porte-satellites (2).

3. Unité de porte-satellites (1) selon la revendication 1 ou 2, **caractérisée en que** le profilage (17,18) est exécuté sur l'élément de transmission (5).

4. Unité de porte-satellites (1) selon l'une quelconque des revendications 1 à 3, **caractérisée par** les particularités suivantes :
4.1 l'élément de transmission (5) est exécuté sous forme d'axe épaulé (6) ;
4.2 la surface de contact (12a, 12b) sur l'axe épaulé (6) est directement formée sur les surfaces frontales (10, 11) de l'axe épaulé (6) qui résultent de la modification de la section .

5. Unité de porte-satellites (1) selon la revendication 4, **caractérisée en ce que** l'élément de transmission (5) est exécuté en une seule pièce, et la connexion solidaire en rotation et le serrage axial sont réalisés grâce à des moyens (31) permettant le serrage axial.

6. Unité de porte-satellites (1) selon la revendication 5, **caractérisée par** les particularités suivantes :
6.1 dans ses zones libres de la zone de plus grand diamètre (7), l'élément de transmission (5) s'étend du moins partiellement dans des trous traversants des éléments de porte-satellites (2, 3) ou au-delà de ceux-ci suivant la direction axiale ;
6.2 les moyens (31) permettant le serrage axial comprennent au moins un élément de vissage (32) et un écrou à anneau (34) ;
6.3 l'élément de vissage (32) s'appuie, au niveau de sa tête, sur un élément de porte-satellites (2, 3) et est guidé par le premier élément de porte-satellites (2), l'élément de transmission (5) et le deuxième élément de porte-satellites (3) ;
6.4 l'écrou à anneau (34) s'appuie sur l'autre des éléments de porte-satellites (3,2).

7. Unité de porte-satellites (1) selon la revendication 5, **caractérisée par** les particularités suivantes :
7.1 dans ses zones libres de la zone de plus grand diamètre (7), l'élément de transmission (5) s'étend du moins partiellement dans des trous traversants des éléments de porte-satellites (2, 3) ou au-delà de ceux-ci suivant la direction axiale ;
7.2 les moyens (31) permettant le serrage axial comprennent au moins une zone terminale filetée sur l'élément de transmission (5), laquelle coopère avec un écrou à anneau (38, 39) et s'appuie sur l'élément de porte-satellites (2,3).

8. Unité de porte-satellites (1) selon la revendication 4, **caractérisée en ce que** l'élément de transmission (5) se compose de plusieurs éléments individuels, et la connexion solidaire en rotation et le serrage axial sont réalisés par l'intermédiaire de moyens (31) permettant une connexion solidaire en rotation et un serrage axial.

9. Unité de porte-satellites (1) selon la revendication 8, **caractérisée par** les particularités suivantes :
9.1 l'élément de transmission (5) comprend deux coussinets, un premier coussinet (41) et un deuxième coussinet (42) ;
9.2 l'un des deux coussinets (41, 42) - le premier coussinet (41) ou le deuxième coussinet (42) - entoure l'autre des coussinets (42, 41) suivant la direction circonférentielle et forme la zone de diamètre (7) plus important de l'élément de transmission (5).

10. Unité de porte-satellites (1) selon la revendication 9, **caractérisée en ce que** les moyens (31) permettant le serrage axial comprennent au moins une zone terminale filetée du premier coussinet (41) et un écrou à anneau coopérant avec celle-ci, lequel s'appuie sur l'élément de porte-satellites (2, 3) suivant la direction axiale.

11. Unité de porte-satellites (1) selon la revendication 10, **caractérisée en ce que** l'autre zone terminale du premier coussinet (41) comprend un palier cylindrique (44), lequel s'appuie axialement sur la face frontale détournée de l'élément de transmission (5) de l'élément de porte-satellites (40).

12. Unité de porte-satellites (1) selon l'une quelconque des revendications 9 à 11, **caractérisée en ce que** les moyens (31) permettant le serrage axial comprennent un élément de vissage (49) qui s'étend axialement à travers les coussinets (41, 42) et dont l'élément formant tête s'appuie sur un des éléments de porte-satellites (2, 3), un écrou à anneau (50) assurant une sécurité au niveau de l'autre des éléments de porte-satellites (3, 2).

13. Unité de porte-satellites (1) selon les revendications 1 à 12, **caractérisée par** les particularités suivantes :
13.1 l'élément de transmission (5) est exécuté sous forme d'axe épaulé (6) ;
13.2 au moins un élément intermédiaire (29, 30) qui, de par sa conception, forme le profilage (17, 18), est disposé entre chaque surface frontale (10, 11) résultant de la modification de la section et les éléments de porte-satellites (2, 3).

14. Unité de porte-satellites (1) selon l'une quelconque des revendications 1 à 13, **caractérisée en ce que** le profilage (17, 18) est obtenu grâce à une modification brutale de la section de l'élément (5, 6, 2, 3, 29, 30) formant une surface de contact (12a, 12b, 13, 14).

15. Unité de porte-satellites (1) selon l'une quelconque des revendications 1 à 14, **caractérisée en ce que** le profilage est obtenu grâce à une modification constante de la section de l'élément (5, 6, 2, 3, 29, 30) formant la surface de contact (12a, 12b, 13, 14).
